# EUROPÄISCHE PATENTSCHRIFT

(11) **EP 2 708 468 B1**
(45) Veröffentlichungstag und Bekanntmachung des Hinweises auf die Patenterteilung: **26.12.2018**
(21) Anmeldenummer: 13181200.0
(22) Anmeldetag: 21.08.2013
(51) Int. Cl.: B64D 11/06, B60N 3/00

(54) **Sitzvorrichtung**
Seating device
Siège

(30) Priorität: 17.09.2012 DE 102012108673
(43) Veröffentlichungstag der Anmeldung: 19.03.2014
(73) Patentinhaber: Recaro Aircraft Seating GmbH & Co. KG, 74523 Schwäbisch Hall (DE)
(72) Erfinder: Kieser, Olaf, 74635 Kupferzell-Bauersbach (DE)
(74) Vertreter: Daub, Thomas

(56) Entgegenhaltungen:
- WO-A1-2008/141829
- WO-A1-2012/082071
- DE-A1- 10 031 700
- DE-A1-102006 015 180
- US-A- 5 547 247

## Beschreibung

### Stand der Technik

Die Erfindung betrifft eine Sitzvorrichtung nach dem Oberbegriff des Anspruchs 1.

Es ist bereits ein Sitz mit einer Sitzvorrichtung, insbesondere einer Flugzeugsitzvorrichtung, mit zumindest einer Sitzeinheit und mit zumindest einer Bewegungseinheit, die an einem bezüglich einer zumindest im Wesentlichen senkrecht zu einer Sitzrichtung ausgerichteten Querrichtung angeordneten Seitenbereich der Sitzeinheit angeordnet und dazu vorgesehen ist, zumindest einen Gegenstand, insbesondere einen Tisch, an der Sitzeinheit beweglich zu lagern, vorgeschlagen worden. Insbesondere ist aus dem Patent US 5,547,247 ein Sitz mit einer Sitzvorrichtung entsprechend dem Oberbegriffs des Anspruchs 1 vorgeschlagen worden.

Die Aufgabe der Erfindung besteht insbesondere darin, eine gattungsgemäße Vorrichtung mit verbesserten Eigenschaften hinsichtlich einer beweglichen Lagerung von Komponenten der Sitzvorrichtung bereitzustellen und insbesondere eine Funktionstauglichkeit der Sitzvorrichtung zu verbessern. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Sitzvorrichtung, insbesondere einer Flugzeugsitzvorrichtung, mit zumindest einer Sitzeinheit und mit zumindest einer Bewegungseinheit, die an einem bezüglich einer zumindest im Wesentlichen senkrecht zu einer Sitzrichtung ausgerichteten Querrichtung angeordneten Seitenbereich der Sitzeinheit angeordnet und dazu vorgesehen ist, zumindest einen Gegenstand, insbesondere einen Tisch, an der Sitzeinheit beweglich zu lagern, wobei die Bewegungseinheit dazu vorgesehen ist, den Gegenstand in Richtung eines weiteren, von dem einen Seitenbereich bezüglich der Querrichtung getrennt angeordneten Seitenbereichs der Sitzeinheit zu bewegen, wobei der Gegenstand in einer Verstaustellung des Gegenstands in einem Hohlraum einer in dem Seitenbereich der Sitzeinheit angeordneten Armlehneneinheit der Sitzeinheit angeordnet ist und wobei die Bewegungseinheit zumindest eine an der Sitzeinheit angeordnete Lagereinheit mit zumindest einer ersten Schwenkachse aufweist und dazu vorgesehen ist, den Gegenstand um die Schwenkachse in die Querrichtung zu bewegen, und wobei die Lagereinheit zumindest eine zweite Schwenkachse aufweist, die zumindest im Wesentlichen senkrecht zu der ersten Schwenkachse der Lagereinheit ausgerichtet ist und dazu vorgesehen ist, den Gegenstand ausgehend von der Verstaustellung des Gegenstands um die zweite Schwenkachse in einer zumindest im Wesentlichen parallel zu der Sitzrichtung ausgerichteten Ebene zu schwenken, und wobei die Bewegungseinheit zumindest eine weitere, von der an der Sitzeinheit angeordneten Lagereinheit getrennt ausgebildete Lagereinheit aufweist, die in zumindest einer Bewegungsstellung der Gebrauchsstellung in der Querrichtung beabstandet zu der Lagereinheit angeordnet ist, wobei die weitere Lagereinheit zumindest eine dritte Schwenkachse aufweist, die zumindest im Wesentlichen parallel zu der ersten Schwenkachse der Lagereinheit ausgerichtet ist, wobei die Bewegungseinheit zumindest zwei Verbindungselemente, die dazu vorgesehen sind, die Lagereinheit und die weitere Lagereinheit zu verbinden, und zumindest eine Führungseinheit aufweist, die dazu vorgesehen ist, den Gegenstand bei einer Bewegung des Gegenstands zu führen und eine Schwenkbewegung des Gegenstands um die dritte Schwenkachse der weiteren Lagereinheit zu begrenzen.

Es wird vorgeschlagen, dass die Führungseinheit zumindest ein Führungselement aufweist, das an zumindest einem Kopplungspunkt an der weiteren Lagereinheit angeordnet ist, der von zumindest einem Kopplungspunkt von zumindest einem der beiden Verbindungselemente bezüglich der Querrichtung beabstandet angeordnet ist. Beispielsweise ist die Bewegungseinheit dazu vorgesehen, den Gegenstand mittels einer Kulissenführung in Richtung des Weiteren, von dem einen Seitenbereich bezüglich der Querrichtung getrennt angeordneten Seitenbereich der Sitzeinheit zu bewegen. Ebenfalls denkbar ist, dass die Bewegungseinheit dazu vorgesehen ist, den Gegenstand mittels einer elastischen Lagerung des Gegenstands, insbesondere mittels einer elastischen Lagerung des Gegenstands an dem einen Seitenbereich der Sitzeinheit, in Richtung des weiteren, von dem einen Seitenbereich bezüglich der Querrichtung getrennt angeordneten Seitenbereich der Sitzeinheit zu bewegen. Unter einer "Sitzeinheit" soll insbesondere eine Einheit verstanden werden, die zumindest eine Rückenlehneneinheit und zumindest eine Sitzbodeneinheit aufweist. Insbesondere weist die Sitzeinheit zumindest eine an der Sitzbodeneinheit und/oder an der Rückenlehneneinheit angeordnete Armlehneneinheit auf. Vorzugsweise sind die Rückenlehneneinheit und die Sitzbodeneinheit schwenkbar miteinander verbunden. Alternativ ist ebenfalls denkbar, dass die Rückenlehneneinheit und die Sitzbodeneinheit starr miteinander verbunden sind. Zusätzlich kann die Sitzeinheit eine an der Rückenlehneneinheit angeordnete Kopfstütze aufweisen. Ebenfalls denkbar ist, dass die Sitzeinheit zusätzlich eine an der Sitzbodeneinheit angeordnete Beinauflageeinheit aufweist. Unter der Wendung, dass eine Gerade und/oder Ebene "zumindest im Wesentlichen senkrecht" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene einen Winkel einschließt, der um weniger als 5°, vorzugsweise um weniger als 3° und insbesondere um weniger als 1° von einem Winkel von 90° abweicht. Unter einer "Sitzrichtung" soll insbesondere eine Richtung verstanden werden, welche bei einem ordnungsgemäßen Sitzen eines Passagiers, insbesondere bei parallel ausgerichteten Oberschenkeln des Passagiers, im Wesentlichen der Richtung entspricht, in welcher sich die Oberschenkel des Passagiers vom Gesäß bis zum Kniebereich erstrecken. In einer aufrechten Stellung einer Sitzeinheit, in welcher eine Rückenlehneneinheit zumindest im Wesentlichen senkrecht zu einem Boden ausgerichtet ist, ist die Sitzrichtung zumindest im Wesentlichen parallel zu dem Boden und zumindest im Wesentlichen senkrecht zu der von der Rückenlehneneinheit gebildeten Rückenlehnenfläche ausgerichtet. Wird die Sitzvorrichtung für einen Fluggastsitz verwendet, entspricht die Sitzrichtung typischerweise der Flugrichtung. Unter der Wendung, dass eine Gerade und/oder Ebene "zumindest im Wesentlichen parallel" zu einer weiteren, von der einen Gerade und/oder Ebene getrennt ausgebildeten Gerade und/oder Ebene ausgerichtet ist, soll insbesondere verstanden werden, dass die Gerade und/oder Ebene mit der weiteren Gerade und/oder Ebene einen Winkel einschließt, der um weniger als 5°, vorzugsweise um weniger als 3° und insbesondere um weniger als 1° von einem Winkel von 0° abweicht. Unter "vorgesehen" soll insbesondere speziell ausgelegt und/oder ausgestattet verstanden werden. Durch eine erfindungsgemäße Ausgestaltung kann vorteilhaft der Gegenstand flexibel und beweglich an der Sitzeinheit gelagert werden, wodurch eine Verstellungsmöglichkeit des Gegenstands verbessert werden kann. Zudem kann besonders vorteilhaft durch die Bewegung des Gegenstands von dem einen Seitenbereich der Sitzeinheit in Richtung des weiteren Seitenbereichs der Sitzeinheit an dem einen Seitenbereich der Sitzeinheit mehr Raum geschaffen sowie der Gegenstand bezüglich der Querrichtung mittig in der Sitzeinheit angeordnet werden, wodurch vorteilhaft ein Komfort für einen Passagier erhöht werden kann. Weiterhin kann bei einer gangseitig angeordneten Sitzeinheit ein Abstand des Gegenstands von einem Kabinengang erhöht und damit eine Gangbreitenvorschrift eingehalten werden. Durch eine erfindungsgemäße Ausgestaltung kann vorteilhaft insbesondere ein Überlappen von Kopplungspunkten des Führungselements der Führungseinheit und des zumindest einen Verbindungselements vermieden und damit eine Funktionstauglichkeit der Sitzvorrichtung verbessert werden.

Ferner wird vorgeschlagen, dass die Bewegungseinheit dazu vorgesehen ist, den Gegenstand durch zumindest eine Schwenkbewegung in die Querrichtung zu bewegen. Insbesondere ist die Bewegungseinheit dazu vorgesehen, den Gegenstand durch zumindest eine Rotationsbewegung in die Querrichtung zu bewegen. Durch eine erfindungsgemäße Ausgestaltung kann vorteilhaft der Gegenstand schwenkbar an der Sitzeinheit gelagert werden, wodurch der Gegenstand über einen weiten Bereich bewegt werden kann.

Unter einer "Lagereinheit" soll insbesondere eine Einheit verstanden werden, die dazu vorgesehen ist, zumindest einen Gegenstand an einer Einheit, insbesondere an einer Sitzeinheit, zu lagern. Insbesondere ist die Lagereinheit dazu vorgesehen, den Gegenstand beweglich an der Einheit zu lagern. Vorzugsweise weist die Lagereinheit zumindest eine Schwenkachse zu der beweglichen Lagerung des Gegenstands an der Einheit auf.

Unter einer "Schwenkachse" soll insbesondere eine Achse verstanden werden, um welche in
zumindest einem Bewegungszustand eine Bewegung, insbesondere eine Drehung, des Gegenstands erfolgt. Insbesondere ist die Schwenkachse als eine Gerade ausgebildet. Durch eine erfindungsgemäße Ausgestaltung kann vorteilhaft der Gegenstand flexibel und beweglich an der Sitzeinheit gelagert werden.

Durch eine erfindungsgemäße Ausgestaltung können vorteilhaft zwei differierende Winkelbereiche durch jeweils eine Schwenkachse abgedeckt werden, wodurch der Gegenstand flexibel in mehreren Ebenen bewegt werden kann.

Insbesondere ist die Lagereinheit dazu vorgesehen, den Gegenstand aus einer Verstaustellung des Gegenstands, in welcher der Gegenstand zu einem Großteil in einem Hohlraum der Armlehneneinheit der Sitzeinheit angeordnet ist, um die weitere Schwenkachse in der zumindest im Wesentlichen parallel zu der Sitzrichtung ausgerichteten Ebene zu schwenken. Durch eine erfindungsgemäße Ausgestaltung kann vorteilhaft der Gegenstand in zwei differierende Winkelbereiche verschwenkt werden, wodurch der Gegenstand sehr flexibel an der Sitzeinheit gelagert werden kann.

Insbesondere ist die weitere Lagereinheit an dem Gegenstand angeordnet. Vorzugsweise ist die zumindest eine Bewegungsstellung als eine Gebrauchsstellung ausgebildet, in welcher die weitere Lagereinheit zumindest zu einem Teil von dem einen Seitenbereich der Sitzeinheit in der Querrichtung beabstandet ist. Insbesondere weist die weitere Lagereinheit in der Bewegungsstellung einen zumindest im Wesentlichen parallel zu der Querrichtung ausgerichteten Abstand von dem einen Seitenbereich der Sitzeinheit, insbesondere von der in dem Seitenbereich der Sitzeinheit angeordneten Armlehneneinheit, von mehr als 1 cm, vorzugsweise von mehr als 2 cm und insbesondere von mehr als 3 cm auf. Durch eine erfindungsgemäße Ausgestaltung kann
vorteilhaft eine weitere Lagereinheit bereitgestellt werden, wodurch eine weitere Verstellungsmöglichkeit erreicht sowie eine Flexibilität erhöht werden können.

Weiterhin wird vorgeschlagen, dass die weitere Lagereinheit in der Bewegungsstellung in einer bezüglich einer zumindest im Wesentlichen senkrecht zu der Sitzrichtung sowie zu der Querrichtung ausgerichteten Vertikalrichtung beabstandet zu der Lagereinheit ist. Insbesondere ist die Vertikalrichtung zumindest im Wesentlichen senkrecht zu einer Aufständerfläche der Sitzeinheit angeordnet. Durch eine erfindungsgemäße Ausgestaltung kann vorteilhaft die weitere Lagereinheit räumlich getrennt von der einen Lagereinheit angeordnet werden, wodurch vorteilhaft eine Verstellungsmöglichkeit an mehreren räumlich getrennt angeordneten Bereichen bereitgestellt werden kann.

Insbesondere ist die Bewegungseinheit dazu vorgesehen, den Gegenstand um die Schwenkachse der weiteren Lagereinheit in die Querrichtung zu bewegen. Durch eine erfindungsgemäße Ausgestaltung kann vorteilhaft eine Bewegung des Gegenstands in die Querrichtung an zwei räumlich getrennt angeordneten Bereichen erreicht werden.

Insbesondere sind die Verbindungselemente jeweils als ein Hebel ausgebildet. Vorzugsweise sind die Verbindungselemente jeweils schwenkbar mit der Lagereinheit und mit der weiteren Lagereinheit verbunden. Durch eine erfindungsgemäße Ausgestaltung kann vorteilhaft eine Verbindung zwischen der Lagereinheit und der weiteren Lagereinheit hergestellt werden, wodurch vorteilhaft eine relative Bewegung der weiteren Lagereinheit in Bezug auf die Lagereinheit erreicht werden kann.

Weiterhin wird vorgeschlagen, dass zumindest eines der Verbindungselemente zumindest ein Anschlagselement aufweist, das dazu vorgesehen ist, die Schwenkbewegung des Gegenstands um die Schwenkachse der Lagereinheit zu begrenzen. Unter einem "Anschlagselement" soll insbesondere ein Element verstanden werden, das zumindest eine Anschlagsfläche aufweist, die in zumindest einem Bewegungszustand, in dem das Anschlagselement die Schwenkbewegung des Gegenstands um die Schwenkachse der Lagereinheit begrenzt, mit einer weiteren Anschlagsfläche eines weiteren Elements in Anlage ist. Insbesondere ist die Anschlagsfläche des Anschlagselements in dem Bewegungszustand in einem direkten Kontakt mit der weiteren Anschlagsfläche des weiteren Elements. Vorzugsweise ist das Anschlagselement an einem Endbereich des Verbindungselements angeordnet. Insbesondere ist das Anschlagselement als ein Vorsprung des Verbindungselements ausgebildet. Durch eine erfindungsgemäße Ausgestaltung kann vorteilhaft die Schwenkbewegung des Gegenstands um die Schwenkachse der Lagereinheit auf einen gewünschten Schwenkbereich begrenzt werden, wodurch vorteilhaft eine Schwenkbewegung in einem unerwünschten Schwenkbereich vermieden und eine optimierte Verstellung des Gegenstands erreicht werden kann.

Insbesondere ist die Führungseinheit dazu vorgesehen, den Gegenstand bei einer Schwenkbewegung um die Schwenkachse der Lagereinheit zu führen. Vorzugsweise ist die Führungseinheit dazu vorgesehen, den Gegenstand bei einer Schwenkbewegung des Gegenstands um die Schwenkachse der weiteren Lagereinheit zu führen. Durch eine erfindungsgemäße Ausgestaltung kann vorteilhaft eine harmonische Bewegung des Gegenstands erreicht werden. Zudem kann vorteilhaft die Bewegung des Gegenstands durch die Führungseinheit vorgegeben und damit zusätzliche Freiheitsgrade, welche ungewollte Bewegungen hervorrufen würden, eingeschränkt werden.

Zudem wird vorgeschlagen, dass die Führungseinheit dazu vorgesehen ist, die Schwenkbewegung des Gegenstands um die Schwenkachse der weiteren Lagereinheit zu begrenzen. Insbesondere ist die Führungseinheit dazu vorgesehen ist, die Schwenkbewegung des Gegenstands um die Schwenkachse der weiteren Lagereinheit durch zumindest eine Klemmung zu begrenzen. Vorzugsweise weist die Führungseinheit zumindest zwei Führungselemente auf, die dazu vorgesehen sind, die Schwenkbewegung des Gegenstands um die Schwenkachse der weiteren Lagereinheit durch ein Zusammenwirken der Führungselemente, insbesondere durch ein Verklemmen der Führungselemente, zu begrenzen. Insbesondere ist die Führungseinheit dazu vorgesehen, den Gegenstand zumindest in einer Stellung, insbesondere zumindest in einer Gebrauchsstellung des Gegenstands, zu halten. Durch eine erfindungsgemäße Ausgestaltung kann vorteilhaft die Schwenkbewegung des Gegenstands um die Schwenkachse der weiteren Lagereinheit auf einen gewünschten Schwenkbereich begrenzt werden, wodurch vorteilhaft eine Schenkbewegung in einem unerwünschten Schwenkbereich vermieden werden kann.

Weiterhin wird vorgeschlagen, dass die Führungseinheit bezüglich der Sitzrichtung zumindest im Wesentlichen zwischen den beiden Verbindungselementen angeordnet ist. Durch eine erfindungsgemäße Ausgestaltung kann vorteilhaft die Führungseinheit sicher angeordnet und damit eine Wahrscheinlichkeit einer Beschädigung der Führungseinheit verringert werden. Dadurch kann vorteilhaft über einen langen Zeitraum eine gewünschte Bewegung des Gegenstands ausgeführt werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Ausschnitt eines erfindungsgemäßen Sitzes mit einer erfindungsgemäßen Sitzvorrichtung, wobei ein Gegenstand in einer Verstaustellung angeordnet ist,
- Fig. 2a: einen Ausschnitt des Sitzes aus Fig. 1 mit der erfindungsgemäßen Sitzvorrichtung, wobei der Gegenstand in mehreren Positionen dargestellt ist,
- Fig. 2b: eine vergrößerte Darstellung eines Teilbereichs aus Fig. 2a, wobei der Gegenstand in einer Gebrauchsstellung angeordnet ist und
- Fig. 3: einen Teil einer erfindungsgemäßen Sitzvorrichtung in einer Explosionsdarstellung.

### Beschreibung des Ausführungsbeispiels

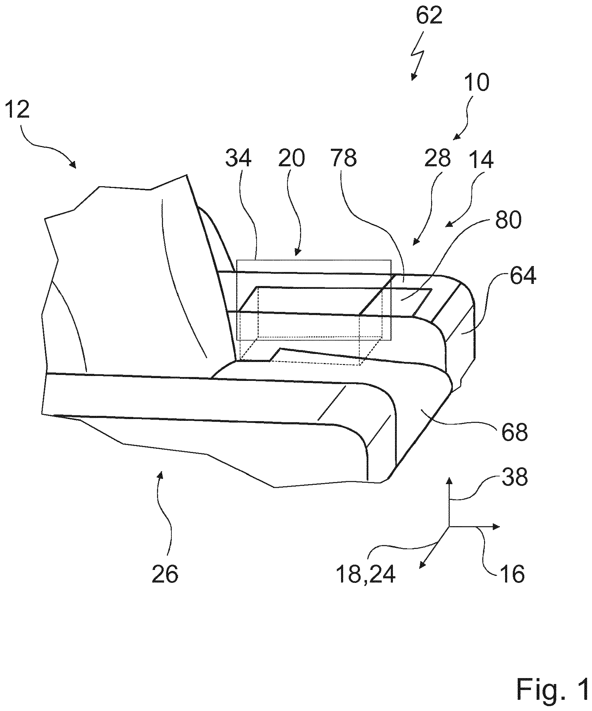

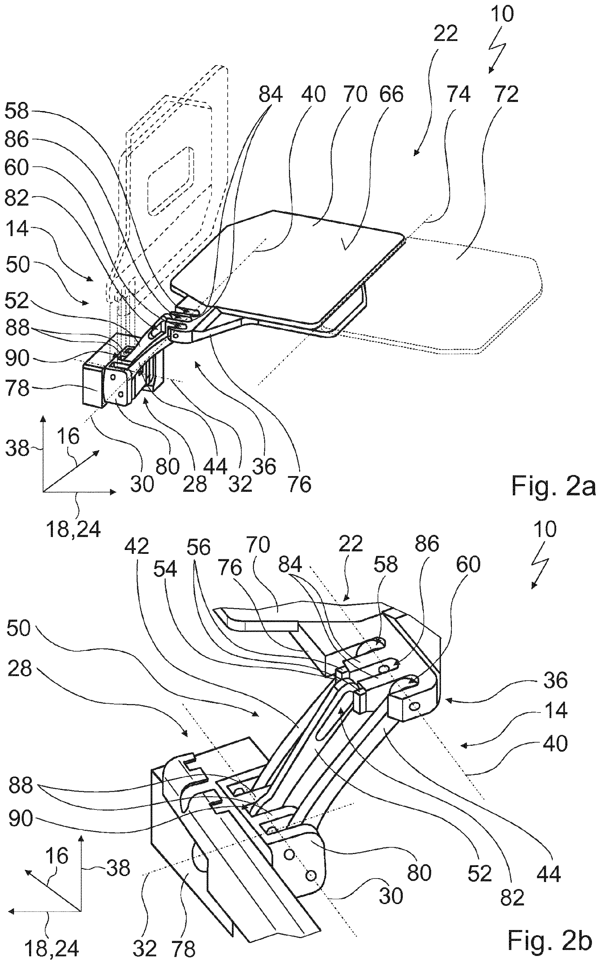

Fig. 1 zeigt einen Ausschnitt eines erfindungsgemäßen Sitzes 62 mit einer erfindungsgemäßen Sitzvorrichtung 10, wobei ein Gegenstand 22 in einer Verstaustellung angeordnet ist. Die Sitzvorrichtung 10 ist als eine Flugzeugsitzvorrichtung ausgebildet. Ausgestattet ist die Sitzvorrichtung 10, und zwar die Flugzeugsitzvorrichtung, mit einer Sitzeinheit 12 und mit einer Bewegungseinheit 14, die an einem bezüglich einer senkrecht zu einer Sitzrichtung 16 ausgerichteten Querrichtung 18 angeordneten Seitenbereich 20 der Sitzeinheit 12 angeordnet und dazu vorgesehen ist, den Gegenstand 22, und zwar einen Tisch, an der Sitzeinheit 12 beweglich zu lagern. In der in Fig. 1 dargestellten Verstaustellung des Gegenstands 22 ist der Gegenstand 22 in einem Hohlraum (nicht dargestellt) einer in dem Seitenbereich 20 der Sitzeinheit 12 angeordneten Armlehneneinheit 64 der Sitzeinheit 12 angeordnet. Die Sitzeinheit 12 weist neben der in dem Seitenbereich 20 der Sitzeinheit 12 angeordneten Armlehneneinheit 64 eine weitere in einem von dem einen Seitenbereich 20 bezüglich der Querrichtung 18 getrennt angeordneten Seitenbereich 26 der Sitzeinheit 12 angeordnete Armlehneneinheit 64 auf. In Fig. 1 ist der Übersichtlichkeit halber lediglich die in dem Seitenbereich 20 der Sitzeinheit 12 angeordnete Armlehneneinheit 64 mit Bezugszeichen versehen. In der in Fig. 1 gezeigten Verstaustellung des Gegenstands 22 ist lediglich ein kleiner Ausschnitt der Bewegungseinheit 14 zu erkennen, da ein restlicher Teil der Bewegungseinheit 14 in dem Hohlraum der Armlehneneinheit 64 angeordnet ist. Zu einer genaueren Beschreibung der Bewegungseinheit 14 wird auf Fig. 2a bis 3 verwiesen, in welchen auf eine Darstellung des Sitzes 62 und der Sitzeinheit 12 der Übersichtlichkeit halber verzichtet wurde.

Die Bewegungseinheit 14 ist dazu vorgesehen, den Gegenstand 22 in Richtung 24 des weiteren, von dem einen Seitenbereich 20 bezüglich der Querrichtung 18 getrennt angeordneten Seitenbereich 26 der Sitzeinheit 12 zu bewegen. Beispielsweise ist die Bewegungseinheit 14 dazu vorgesehen, den Gegenstand 22 mittels einer Kulissenführung in die Querrichtung 18 zu bewegen. Ebenfalls denkbar ist, dass die Bewegungseinheit 14 dazu vorgesehen ist, den Gegenstand 22 durch eine elastische Lagerung des Gegenstands 22 in die Querrichtung 18 zu bewegen. Im vorliegenden Ausführungsbeispiel ist die Bewegungseinheit 14 dazu vorgesehen, den Gegenstand 22 durch eine Schwenkbewegung in die Querrichtung 18 zu bewegen. Fig. 2a zeigt einen Ausschnitt des Sitzes 62 aus Fig. 1 mit der Sitzvorrichtung 10, wobei der Gegenstand 22 in mehreren Positionen dargestellt ist, welche im Folgenden näher erläutert werden sollen.

Die Bewegungseinheit 14 weist eine an der Sitzeinheit 12 angeordnete Lagereinheit 28 mit einer Schwenkachse 30 auf und ist dazu vorgesehen, den Gegenstand 22 um die Schwenkachse 30 in die Querrichtung 18 zu bewegen (vgl. auch Fig. 2b). Die Lagereinheit 28 weist eine Lagerführung 78 sowie eine Lageraufnahme 80 auf. Die Lagerführung 78 der Lagereinheit 28 ist in der Sitzeinheit 12, und zwar in der Armlehneneinheit 64 der Sitzeinheit 12, angeordnet. Die Lagerführung 78 und die Lageraufnahme 80 sind schwenkbar miteinander verbunden, wobei die Lageraufnahme 80 um 180° drehbar in der fest in der Sitzeinheit 12 angeordneten Lagerführung 78 gelagert ist. Alternativ ist denkbar, dass die Lageraufnahme 80 um einen, einem Fachmann als sinnvoll erscheinenden Winkel drehbar in der fest in der Sitzeinheit 12 angeordneten Lagerführung 78 gelagert ist. Fig. 2b zeigt eine vergrößerte Darstellung eines Teilbereichs aus Fig. 2a, wobei der Gegenstand 22 in einer Gebrauchsstellung angeordnet ist. In der Gebrauchsstellung ist eine Gebrauchsoberfläche 66 des Gegenstands 22 parallel zu einer Sitzbodeneinheit 68 der Sitzeinheit 12 ausgerichtet. Der Gegenstand 22 weist zwei Gegenstandsteilbereiche 70, 72 auf, welche schwenkbar durch eine Gegenstandsschwenkachse 74 miteinander verbunden sind. In der Gebrauchsstellung ist der Gegenstandsteilbereich 72 um die Gegenstandsschwenkachse 74 verschwenkt. Dadurch bilden die beiden Gegenstandsteilbereiche 70, 72 die Gebrauchsoberfläche 66 des Gegenstands 22 aus, welche einem in der Sitzeinheit 12 sitzenden Passagier eine große Fläche bietet.

Zusätzlich zu der Schwenkachse 30 der Lagereinheit 28 weist die Lagereinheit 28 eine weitere Schwenkachse 32 auf, die senkrecht zu der einen Schwenkachse 30 der Lagereinheit 28 ausgerichtet ist. Die Lagereinheit 28 ist dazu vorgesehen, den Gegenstand 22 um die weitere Schwenkachse 32 in einer parallel zu der Sitzrichtung 16 ausgerichteten Ebene 34 zu schwenken. Im dargestellten Fall ist die Lagereinheit 28 dazu vorgesehen, den Gegenstand 22 ausgehend von der Verstaustellung des Gegenstands 22 in der Ebene 34 in eine in Fig. 2a gestrichelt dargestellte Zwischenstellung des Gegenstands 22 zu schwenken. In der Zwischenstellung ist der Gegenstand 22 relativ zu der Verstaustellung in der Ebene 34 um 180° verschwenkt. Alternativ ist denkbar, dass der Gegenstand 22 in der Zwischenstellung relativ zu der Verstaustellung in der Ebene 34 um einen, einem Fachmann als sinnvoll erscheinenden Winkel verschwenkt ist. Ausgehend von der Zwischenstellung ist die Bewegungseinheit 14 - wie bereits oben erwähnt - dazu vorgesehen, den Gegenstand 22 um die Schwenkachse 30 der Lagereinheit 28 in die Querrichtung 18 zu bewegen. Im Folgenden soll beschrieben werden, wie der Gegenstand 22 ausgehend von der Zwischenstellung in die Gebrauchsstellung bewegt wird.

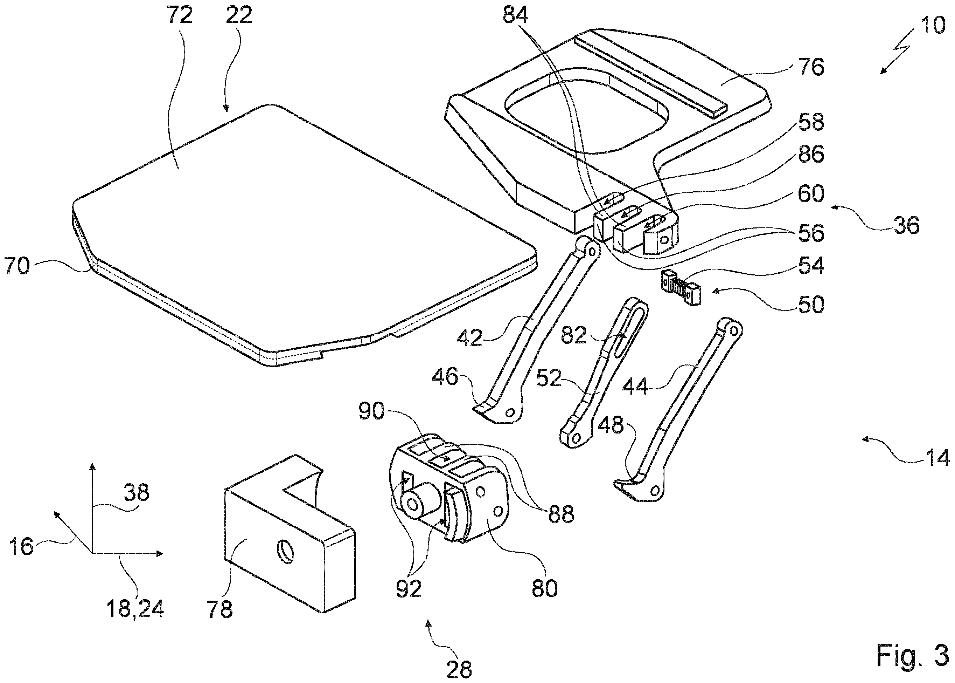

Die Bewegungseinheit 14 weist eine weitere, von der an der Sitzeinheit 12 angeordneten Lagereinheit 28 getrennt ausgebildete Lagereinheit 36 auf, die in einer Bewegungsstellung in der Querrichtung 18 beabstandet zu der Lagereinheit 28 angeordnet ist. Die Bewegungsstellung ist im vorliegenden Ausführungsbeispiel als die Gebrauchsstellung ausgebildet. Zudem ist die weitere Lagereinheit 36 in der Bewegungsstellung in einer bezüglich einer senkrecht zu der Sitzrichtung 16 sowie zu der Querrichtung 18 ausgerichteten Vertikalrichtung 38 beabstandet zu der Lagereinheit 28. Die weitere Lagereinheit 36 ist an einem Haltearm 76 angeordnet. Der Haltearm 76 ist dazu vorgesehen, den Gegenstand 22 in einem montierten Zustand zu halten. Die Bewegungseinheit 14 weist zwei Verbindungselemente 42, 44 auf, die dazu vorgesehen sind, die Lagereinheit 28 und die weitere Lagereinheit 36 zu verbinden. Alternativ ist denkbar, dass die Bewegungseinheit 14 ein im Wesentlichen als doppelseitige Gabel ausgebildetes Verbindungselement aufweist, das dazu vorgesehen ist, die Lagereinheit 28 und die weitere Lagereinheit 36 zu verbinden. Jedes der beiden Verbindungselemente 42, 44 ist als ein Hebel ausgebildet (vgl. Fig. 3). Ein jeweiliges Ende des jeweiligen Verbindungselements 42, 44 ist an der weiteren Lagereinheit 36 schwenkbar gelagert. Ein dem jeweiligen an der weiteren Lagereinheit 36 gelagerten Ende des jeweiligen Verbindungselements 42, 44 entgegengesetzt angeordnetes Ende des jeweiligen Verbindungselements 42, 44 ist schwenkbar an der Lagereinheit 28, und zwar an der Lageraufnahme 80 der Lagereinheit 28, gelagert.

Die Bewegungseinheit 14 weist eine Führungseinheit 50 auf, die dazu vorgesehen ist, den Gegenstand 22 bei einer Bewegung des Gegenstands 22 zu führen. Die Führungseinheit 50 ist bezüglich der Sitzrichtung 16 zwischen den beiden Verbindungselementen 42, 44 angeordnet. Alternativ sind weitere von einer mittigen Anordnung der Führungseinheit 50 abweichende Anordnungen denkbar. Wie Fig. 3 zeigt, weist die Führungseinheit 50 zwei Führungselemente 52, 54 auf. Das Führungselement 52 ist als ein Hebel ausgebildet und weist ein Langloch 82 auf. Das Führungselement 54 ist als ein Bolzen ausgebildet. Das Führungselement 54 weist einen von einer runden Querschnittsform abweichenden Querschnitt auf. Im vorliegenden Ausführungsbeispiel weist das Führungselement 54 einen rechteckigen Querschnitt mit abgerundeten Ecken auf. Und zwar weist das Führungselement 54 einen länglichen Querschnitt auf. Damit wird in der Zwischenstellung ein Klemmen in einem unteren Ende des Langlochs 82 erreicht und eine unbeabsichtigte Kippbewegung des Gegenstands 22 in dieser Stellung vermieden. Alternativ sind weitere, einem Fachmann als sinnvoll erscheinende Querschnittsformen denkbar. In dem montierten Zustand ist das Führungselement 54 in dem Langloch 82 des Führungselements 52 gelagert. Zudem ist das Führungselement 54 in dem montierten Zustand an zwei Vorsprüngen 84 des Haltearms 76 befestigt. Bei der Bewegung des Gegenstands 22 gleitet das Führungselement 52 an dem fest an den Vorsprüngen 84 befestigten Führungselement 54 entlang, wobei das Führungselement 54 durch das Langloch 82 des Führungselements 52 hindurchgreift.

Zwischen den Vorsprüngen 84 ist eine Haltearmausnehmung 86 angeordnet. In der Gebrauchsstellung bezüglich der Sitzrichtung 16 beidseitig zu der Haltearmausnehmung 86 angeordnet sind zwei weitere Haltearmausnehmungen 86, in welchen die Verbindungselemente 42, 44 in dem montierten Zustand schwenkbar gelagert sind. Das Führungselement 54 der Führungseinheit 50 ist an zwei Kopplungspunkten 56 an der weiteren Lagereinheit 36 angeordnet, die von einem jeweiligen Kopplungspunkt 58, 60 von einem jeweiligen der beiden Verbindungselementen 42, 44 bezüglich der Querrichtung 18 beabstandet angeordnet sind. Zudem sind die beiden Kopplungspunkte 56 der weiteren Lagereinheit 36 von dem jeweiligen Kopplungspunkt 58, 60 von dem jeweiligen der beiden Verbindungselemente 42, 44 bezüglich der Sitzrichtung 16 beabstandet angeordnet.

Analog zu den Vorsprüngen 84 des Haltearms 76 weist die Lageraufnahme 80 der Lagereinheit 28 zwei Vorsprünge 88 auf. Zwischen den Vorsprüngen 88 der Lagereinheit 28 ist eine Lageraufnahmeausnehmung 90 angeordnet, in der in dem montierten Zustand das Führungselement 52 der Führungseinheit 50 schwenkbar gelagert ist. In der Gebrauchsstellung bezüglich der Sitzrichtung 16 beidseitig zu der Lageraufnahmeausnehmung 90 angeordnet sind zwei weitere Lageraufnahmeausnehmungen 90, in welchen die Verbindungselemente 42, 44 in dem montierten Zustand schwenkbar gelagert sind. Von den Lageraufnahmeausnehmungen 90 ist der Übersichtlichkeit halber lediglich die Lageraufnahmeausnehmung 90, die zwischen den Vorsprüngen 88 der Lagereinheit 28 angeordnet ist, mit Bezugszeichen versehen.

Jedes der Verbindungselemente 42, 44 weist ein Anschlagselement 46, 48 auf, das dazu vorgesehen ist, die Schwenkbewegung des Gegenstands 22 um die Schwenkachse 30 der Lagereinheit 28 zu begrenzen. Die Anschlagselemente 46, 48 sind an dem der Lagereinheit 28 zugewandten Ende der Verbindungselemente 42, 44 angeordnet und jeweils als ein Verbindungselementvorsprung ausgebildet. Die Anschlagselemente 46, 48 der Verbindungselemente 42, 44 greifen in dem montierten Zustand in Führungsausnehmungen 92 ein (vgl. Fig. 3). Bei der Schwenkbewegung des Gegenstands 22 um die Schwenkachse 30 der Lagereinheit 28 schlagen die Anschlagselemente 46, 48 an Anschlagsflächen (nicht dargestellt) in der Lagereinheit 28, und zwar an Anschlagsflächen in den Führungsausnehmungen 92 der Lageraufnahme 80 der Lagereinheit 28, an. Dadurch wird die Schwenkbewegung des Gegenstands 22 um die Schwenkachse 30 der Lagereinheit 28 begrenzt und eine definierte, gewünschte Endposition erreicht, in welcher die weitere Lagereinheit 36 in einer der Gebrauchsstellung entsprechenden Stellung angeordnet ist. Das Anschlagselement 48 des Verbindungselements 44 ist zudem dazu vorgesehen, die Bewegung des Gegenstands 22 um die Schwenkachse 30 der Lagereinheit 28 lediglich ausgehend von der Zwischenstellung des Gegenstands 22 zu ermöglichen. Demnach ist das Anschlagselement 48 des Verbindungselements 44 dazu vorgesehen, die Bewegung des Gegenstands 22 um die Schwenkachse 30 der Lagereinheit 28 sowie um eine Schwenkachse 40 der weiteren Lagereinheit 36 während der Bewegung des Gegenstands 22 um die weitere Schwenkachse 32 der Lagereinheit 36 zu verhindern. Bei der Bewegung des Gegenstands 22 um die Schwenkachse 30 der Lagereinheit 28 greift das Anschlagselement 48 durch die Führungsausnehmung 92 hindurch in speziell ausgestaltete Aussparungen (nicht dargestellt) der Lagerführung 78 ein. Dies ist lediglich in der Zwischenstellung möglich. Dadurch wird ein Verklemmen des Gegenstands 22 vermieden.

Die weitere Lagereinheit 36 weist die Schwenkachse 40 auf, die parallel zu der Schwenkachse 30 der Lagereinheit 28 ausgerichtet ist. Die weitere Lagereinheit 36 ist dazu vorgesehen, den Gegenstand 22 um die Schwenkachse 40 der weiteren Lagereinheit 36 zu verschwenken. Die Führungseinheit 50 ist dazu vorgesehen, die Schwenkbewegung des Gegenstands 22 um die Schwenkachse 40 der weiteren Lagereinheit 36 zu begrenzen. Im vorliegenden Ausführungsbeispiel ist die Führungseinheit 50 dazu vorgesehen, die Schwenkbewegung des Gegenstands 22 um die Schwenkachse 40 der weiteren Lagereinheit 36 durch ein Zusammenwirken der Führungselemente 52, 54 zu begrenzen. Das Langloch 82 des Führungselements 52 und eine Dicke des Führungselements 54 sind aufeinander abgestimmt. In einer gewünschten Stellung des Gegenstands 22, was im vorliegenden Ausführungsbeispiel die Gebrauchsstellung des Gegenstands 22 ist, verklemmen die Führungselemente 52, 54 und begrenzen damit die Schwenkbewegung des Gegenstands 22. Die Führungseinheit 50 ist dazu vorgesehen, den Gegenstand 22 in der Gebrauchsstellung des Gegenstands 22 zu halten.

Der Gegenstand 22 wird mittels eines Verfahrens zu einer Betätigung der erfindungsgemäßen Sitzvorrichtung 10 bewegt. Zunächst öffnet der in der Sitzeinheit 12 sitzende Passagier eine Öffnung in der Armlehneneinheit 64 und bewegt den Gegenstand 22 aus der Verstaustellung in die Zwischenstellung, indem der Passagier den Gegenstand 22 um die weitere Schwenkachse 32 der Lagereinheit 28 verschwenkt. In einem weiteren Verfahrensschritt bewegt der Passagier den Gegenstand 22 um die Schwenkachse 30 der Lagereinheit 28 in die Querrichtung 18. Zeitgleich erfolgt die Bewegung des Gegenstands 22 um die Schwenkachse 40 der weiteren Lagereinheit 36. Eine jeweilige Begrenzung der jeweiligen Bewegung des Gegenstands 22 erfolgt ebenfalls zeitgleich. Die Bewegung des Gegenstands 22 um die Schwenkachse 30 der Lagereinheit 28 sowie die Bewegung des Gegenstands 22 um die Schwenkachse 40 der weiteren Lagereinheit 36 werden demnach zeitgleich begrenzt. Dadurch wird eine harmonische Bewegung erreicht.

**Bezugszeichen**

| | | | |
|---|---|---|---|
| 10 | Sitzvorrichtung | 52 | Führungselement |
| 12 | Sitzeinheit | 54 | Führungselement |
| 14 | Bewegungseinheit | 56 | Kopplungspunkt |
| 16 | Sitzrichtung | 58 | Kopplungspunkt |
| 18 | Querrichtung | 60 | Kopplungspunkt |
| 20 | Seitenbereich | 62 | Sitz |
| 22 | Gegenstand | 64 | Armlehneneinheit |
| 24 | Richtung | 66 | Gebrauchsoberfläche |
| 26 | Seitenbereich | 68 | Sitzbodeneinheit |
| 28 | Lagereinheit | 70 | Gegenstandsteilbereich |
| 30 | Schwenkachse | 72 | Gegenstandsteilbereich |
| 32 | Weitere Schwenkachse | 74 | Gegenstandsschwenkachse |
| 34 | Ebene | 76 | Haltearm |
| 36 | Weitere Lagereinheit | 78 | Lagerführung |
| 38 | Vertikalrichtung | 80 | Lageraufnahme |
| 40 | Schwenkachse | 82 | Langloch |
| 42 | Verbindungselement | 84 | Vorsprung |
| 44 | Verbindungselement | 86 | Haltearmausnehmung |
| 46 | Anschlagselement | 88 | Vorsprung |
| 48 | Anschlagselement | 90 | Lageraufnahmeausnehmung |
| 50 | Führungseinheit | 92 | Führungsausnehmung |

## Patentansprüche

1. Sitz mit zumindest einer Sitzvorrichtung (10), insbesondere einer Flugzeugsitzvorrichtung, die zumindest eine Sitzeinheit (12) und zumindest eine Bewegungseinheit (14) aufweist, die an einem bezüglich einer zumindest im Wesentlichen senkrecht zu einer Sitzrichtung (16) ausgerichteten Querrichtung (18) angeordneten Seitenbereich (20) der Sitzeinheit (12) angeordnet und dazu vorgesehen ist, zumindest einen Gegenstand (22), insbesondere einen Tisch, des Sitzes an der Sitzeinheit (12) beweglich zu lagern, wobei die Bewegungseinheit (14) dazu vorgesehen ist, den Gegenstand (22) in Richtung (24) eines weiteren, von dem einen Seitenbereich (20) bezüglich der Querrichtung (18) getrennt angeordneten Seitenbereich (26) der Sitzeinheit (12) zu bewegen, wobei der Gegenstand (22) in einer Verstaustellung des Gegenstands (22) in einem Hohlraum einer in dem Seitenbereich (20) der Sitzeinheit (12) angeordneten Armlehneneinheit (64) der Sitzeinheit (12) angeordnet ist und wobei die Bewegungseinheit (14) zumindest eine an der Sitzeinheit (12) angeordnete Lagereinheit (28) mit zumindest einer ersten Schwenkachse (30) aufweist und dazu vorgesehen ist, den Gegenstand (22) um die Schwenkachse (30) in die Querrichtung (18) zu bewegen, und wobei die Lagereinheit (28) zumindest eine zweite Schwenkachse (32) aufweist, die zumindest im Wesentlichen senkrecht zu der ersten Schwenkachse (30) der Lagereinheit (28) ausgerichtet ist und dazu vorgesehen ist, den Gegenstand (22) ausgehend von der Verstaustellung des Gegenstands (22) um die zweite Schwenkachse (32) in einer zumindest im Wesentlichen parallel zu der Sitzrichtung (16) ausgerichteten Ebene (34) zu schwenken, und wobei die Bewegungseinheit (14) zumindest eine weitere, von der an der Sitzeinheit (12) angeordneten Lagereinheit (28) getrennt ausgebildete Lagereinheit (36) aufweist, die in zumindest einer Gebrauchsstellung in der Querrichtung (18) beabstandet zu der Lagereinheit (28) angeordnet ist, wobei die weitere Lagereinheit (36) zumindest eine dritte Schwenkachse (40) aufweist, die zumindest im Wesentlichen parallel zu der ersten Schwenkachse (30) der Lagereinheit (28) ausgerichtet ist, wobei die Bewegungseinheit (14) zumindest zwei Verbindungselemente
(42, 44), die dazu vorgesehen sind, die Lagereinheit (28) und die weitere Lagereinheit (36) zu verbinden, und zumindest eine Führungseinheit (50) aufweist, die dazu vorgesehen ist, den Gegenstand (22) bei einer Bewegung des Gegenstands (22) zu führen, **dadurch gekennzeichnet, dass**
die Führungseinheit (50) zumindest ein Führungselement (52, 54) aufweist, das an zumindest einem Kopplungspunkt (56) an der weiteren Lagereinheit (36) angeordnet ist, der von zumindest einem Kopplungspunkt (58, 60) von zumindest einem der beiden Verbindungselemente (42, 44) bezüglich der Querrichtung (18) beabstandet angeordnet ist, um die Schwenkbewegung des Gegenstands (22) um die dritte Schwenkachse (40) der weiteren Lagereinheit (36) zu begrenzen.

2. Sitz nach Anspruch 1,
**dadurch gekennzeichnet, dass**
die Bewegungseinheit (14) dazu vorgesehen ist, den Gegenstand (22) durch zumindest eine Schwenkbewegung in die Querrichtung (18) zu bewegen.

3. Sitz nach Anspruch 1 oder 2,
**dadurch gekennzeichnet, dass**
die weitere Lagereinheit (36) in der Bewegungsstellung in einer bezüglich einer zumindest im Wesentlichen senkrecht zu der Sitzrichtung (16) sowie zu der Querrichtung (18) ausgerichteten Vertikalrichtung (38) beabstandet zu der Lagereinheit (28) ist.

4. Sitz nach einem der vorhergehenden Ansprüche,
**dadurch gekennzeichnet, dass**
zumindest eines der Verbindungselemente (42, 44) zumindest ein Anschlagselement (46, 48) aufweist, das dazu vorgesehen ist, die Schwenkbewegung des Gegenstands (22) um die erste Schwenkachse (30) der Lagereinheit (28) zu begrenzen.

5. Sitz nach einem der vorhergehenden Ansprüche,
**dadurch gekennzeichnet, dass**
die Führungseinheit (50) bezüglich der Sitzrichtung (16) zumindest im Wesentlichen zwischen den beiden Verbindungselementen (42, 44) angeordnet ist.

## Claims

1. Seat with at least one seating device (10), in particular an aircraft seat device, comprising at least one seat unit (12) and at least one movement unit (14), the at least one movement unit (14) being situated on a side region (20) of the seat unit (12), which is arranged relative to a transverse direction (18) that is oriented at least substantially perpendicularly to a seating direction (16) and is configured to movably support at least one object (22), in particular a table, of the seat on the seat unit (12),
wherein the movement unit (14) is configured to move the object (22) in a direction (24) of a further side region (26) of the seat unit (12), which is arranged, relative to the transverse direction (18), separately from the side region (20), wherein, in a stowage position of the object (22), the object (22) is arranged in a hollow space of an armrest unit (64) of the seat unit (12) that is arranged in the side region (20) of the seat unit (12), and
wherein the movement unit (14) comprises at least one bearing unit (28), which is arranged on the seat unit (12) and has a first pivot axis (30) and is configured to move the object (22) around the pivot axis (30) into the transverse direction (18), and
wherein the bearing unit (28) comprises at least one second pivot axis (32), which is oriented at least substantially perpendicularly to the first pivot axis (30) of the bearing unit (28) and is configured to pivot the object (22), starting from the stowage position of the object (22), around the second pivot axis (32) in a plane (34) that is oriented at least substantially parallel to the seating direction (16), and wherein the movement unit (14) comprises at least one further bearing unit (36), which is implemented separately from the bearing unit (28) that is arranged on the seat unit (12), and which is, in at least one usage position, arranged spaced apart from the bearing unit (28) in the transverse direction (18),
wherein the further bearing unit (36) comprises at least one third pivot axis (40), which is oriented at least substantially parallel to the first pivot axis (30) of the bearing unit (28), wherein the movement unit (14) comprises at least two connection elements (42, 44) that are configured to connect the bearing unit (28) and the further bearing unit (36), and which comprises at least one guiding unit (50) that is configured to guide the object (22) during a movement of the object (22),
**characterised in that**
the guiding unit (50) comprises at least one guiding element (52, 54) that is located on at least one coupling point (56) of the further bearing unit (36), which is arranged spaced apart, relative to the transverse direction (18), from at least one coupling point (58, 60) of at least one of the two connection elements (42, 44), for the purpose of delimiting the pivot movement of the object (22) around the third pivot axis (40) of the further bearing unit (36).

2. Seat according to claim 1,
**characterised in that**
the movement unit (14) is configured to move the object (22) into the transverse direction (18) by at least one pivot movement.

3. Seat according to claim 1 or 2,
**characterised in that,**
in the movement position, the further bearing unit (36) is spaced apart from the bearing unit (28) in a vertical direction (38) that is oriented at least substantially perpendicularly to the seating direction (16) and to the transverse direction (18).

4. Seat according to one of the preceding claims,
**characterised in that**
at least one of the connection elements (41, 44) comprises at least one abutment element (46, 48) that is configured to delimit the pivot movement of the object (22) around the first pivot axis (30) of the bearing unit (28).

5. Seat according to one of the preceding claims,
**characterised in that,**
relative to the seating direction (16), the guiding unit (50) is arranged at least substantially between the two connection elements (42, 44).

## Revendications

1. Siège avec au moins un dispositif de siège (10), notamment un dispositif de siège d'avion, comprenant au moins une unité de siège (12) et au moins une unité de mouvement (14), qui est située à une zone latérale (20) de l'unité de siège (12) - ladite zone latérale (20) étant disposée par rapport à une direction transversale (18) orientée au moins sensiblement perpendiculairement à une direction d'assise (16) - et qui est prévue à supporter au moins un objet (22), notamment une table, du siège à l'unité de siège (12) de façon mobile,
l'unité de mouvement (14) étant prévue à mouvoir l'objet (22) dans une direction (24) d'une autre zone latérale (26) de l'unité de siège (12) - ladite autre zone latérale (26) étant disposée séparément de l'une zone latérale (20) par rapport à la direction transversale (18),
l'objet (22) étant disposé, dans une position de rangement de l'objet (22), dans une cavité d'une unité appuie-bras (64) de l'unité de siège (12), qui est disposée dans la zone latérale (20) de l'unité de siège (10), et
l'unité de mouvement (14) comprenant au moins une unité palier (28), qui est disposée à l'unité de siège (12) et comporte au moins un premier axe pivotant (30), et étant prévue à mouvoir l'objet (22) autour de l'axe pivotant (30), dans la direction transversale (18), et
l'unité palier (28) comportant au moins un deuxième axe pivotant (32), qui est orienté au moins sensiblement perpendiculairement au premier axe pivotant (30) de l'unité palier (28) et est prévue à pivoter l'objet (22), à partir de la position de rangement de l'objet (22), autour du deuxième axe pivotant (32) dans un plan (34) orienté au moins sensiblement en parallèle à la direction d'assise (16), et
l'unité de mouvement (14) comprenant au moins une unité palier additionnelle (36), qui est implémentée séparément de l'unité palier (28) de l'unité de siège (12) et est disposée, dans au moins une position d'usage, à l'écart de l'unité palier (28) dans la direction transversale (18),
l'unité palier additionnelle (36) comprenant au moins un troisième axe pivotant (40), qui est orienté au moins sensiblement en parallèle au premier axe pivotant (30) de l'unité palier (28),
l'unité de mouvement (14) comprenant au moins deux éléments connectifs (42, 44) prévus à raccorder l'unité palier (28) et l'unité palier additionnelle (36), l'unité de mouvement (14) aussi comprenant au moins une unité de guidage (50) prévue à guider l'objet (22) pendant un mouvement de l'objet (22),
**caractérisé en ce que** l'unité de guidage (50) comporte au moins un élément de guidage (52, 54) disposé à l'unité palier additionnelle (36), à au moins un point de couplage (56), lequel est disposé, par rapport à la direction transversale (18), à l'écart d'au moins un point de couplage (58, 60) de l'au moins un des deux éléments connectifs (42, 44), pour le bût de délimiter le mouvement pivotant de l'objet (22) autour du troisième axe pivotant (40) de l'unité palier additionnelle (36).

2. Siège selon la revendication 1, **caractérisé en ce que** l'unité de mouvement (14) est prévue à mouvoir l'objet (22) dans la direction transversale (18) par le biais d'au moins un mouvement pivotant.

3. Siège selon l'une quelconque des revendications 1 ou 2, **caractérisé en ce que,** dans la position de mouvement, l'unité palier additionnelle (36) est à l'écart de l'unité palier (28) dans une direction verticale (38) orientée au moins sensiblement perpendiculairement à la direction d'assise (16) et à la direction transversale (18).

4. Siège selon l'une quelconque des revendications précédentes, **caractérisé en ce qu'**au moins l'un des éléments connectifs (42, 44) comporte au moins un élément butoir (46, 48) prévu à délimiter le mouvement pivotant de l'objet (22) autour du premier axe pivotant (30) de l'unité palier (28).

5. Dispositif de pile à combustible selon l'une quelconque des revendications précédentes, **caractérisé en ce que,** par rapport à la direction d'assise (16), l'unité de guidage (50) est disposée au moins sensiblement entre les deux éléments connectifs (42, 44).
